# EUROPÄISCHE PATENTANMELDUNG

(11) **EP 0 546 994 A1**
(43) Veröffentlichungstag der Anmeldung: **16.06.1993**
(21) Anmeldenummer: 92810934.7
(22) Anmeldetag: 01.12.1992
(51) Int. Cl.: G11B 7/24

(54) **Verfahren zur optischen Informationsspeicherung**

(30) Priorität: 10.12.1991 CH 3627/91
(71) Anmelder: CIBA-GEIGY AG, CH-4002 Basel (CH)
(72) Erfinder: Mizuguchi, Jin, Dr., CH-1700 Fribourg (CH); Giller, Gérald, CH-1630 Bulle (CH)

(57) **Zusammenfassung**

Verfahren zur optischen Aufzeichnung von Informationen mit einem Aufzeichnungsmaterial, bei dem auf einem Träger eine Schicht eines Dithiochinacridons aufgebracht ist, wobei sich gegebenenfalls zwischen Träger und der Schicht aus einem Dithiochinacridon oder auf dieser Schicht eine weitere Schicht eines organischen Hydrazons befindet, oder gegebenenfalls die Schicht aus einem Dithiochinacridon mit einem Hydrazon vermischt ist. Die Informationen werden durch Laserstrahlung im NIR-Bereich aufgezeichnet und sie können durch Messung der Veränderung der Absorption nach dem Transmissions- oder Reflexionsverfahren ein- oder mehrfach ausgelesen werden. Es handelt sich um Informationsspeicher vom WORM-Typ.

## Beschreibung

Die vorliegende Erfindung betrifft ein Verfahren zur optischen Aufzeichnung und Speichern von Informationen in Form von Bits durch Bestrahlung eines Aufzeichnungsmaterials aus einem Träger, der mit mindestens einer Schicht aus einem Dithiochinacridon als Aufzeichnungsmaterial beschichtet ist, auf dem sich gegebenenfalls eine Reflexionsschicht befindet oder gegebenenfalls eine Reflexionsschicht zwischen Träger und der Schicht aus Dithiochinacridon angeordnet ist, wobei sich gegebenenfalls zwischen Träger oder zwischen den Reflexionsschichten und der Dithiochinacridonschicht eine Schicht mit einer organischen Hydrazonschicht befindet, oder gegebenenfalls die Schicht aus Dithiochinacridon mit einem Hydrazon vermischt ist, und gegebenenfalls auf obersten Schicht eine Schutzschicht aufgebracht ist, durch Bestrahlung des Aufzeichnungsmaterials mit Laserstrahlung im NIR-Bereich, ein Aufzeichnungsmaterial sowie ein Material mit den aufgezeichneten Informationen.

Die Verwendung von Farbstoffen, die im nahen Infrarotbereich (NIR-Bereich) Strahlung absorbieren, zur Aufzeichnung von Informationen in WORM-Systemen (write once read many) ist seit längerem bekannt und zum Beispiel von M. Emmelius in Angewandte Chemie, Heft 11, Seiten 1475-1502 (1989) beschrieben. Durch die Laserbestrahlung in solchen Aufzeichnungsmaterialien kann die für die Aufzeichnung von Informationen in Form von Bits notwendige Änderung der Absorption durch physikalische Veränderungen (zum Beispiel durch Sublimation oder Diffusion) oder durch chemische Veränderungen (zum Beispiel Photochromie, Isomerisierungen oder thermische Zersetzung) erzielt werden. Systeme mit metallionenfreien organischen Pigmenten, die bei der Laserbestrahlung direkt einer Phasenumwandlung (veränderte Anordnung der Molküle) und einer damit verbundenen bathochromen oder hypsochromen Verschiebung der Absorptionsbanden unterliegen, sind noch nicht bekannt geworden.

In der EP-A-0 401 791 wird beschrieben, dass Dithiochinacridone durch lokale Behandlung mit einem Lösungsmittel durch Phasenumwandlungen bedingte Absorptionsänderungen aufweisen und daher zum Aufzeichnen und Speichern von Informationen geeignet sind, indem man die Aufzeichnung in Form von Bits (entspricht der lokalen Behandlung) mit einem Tintenstrahldrucker vornimmt.

In der US-A-4 760 004 sind Schichtmaterialien beschrieben, bei denen auf einem metallischen und elektrisch leitenden sowie opaken Substrat eine Schicht eines Dithiochinacridons aufgebracht ist, auf der sich eine weitere Schicht eines Hydrazons befindet. Diese Schichtsysteme eignen sich als elektrophotographische Photorezeptoren zur Erzeugung von latenten Bildern, indem man nach einer integralen Aufladung selektiv mit Laserstrahlung Ladungen abbaut. Das latente Bild kann dann nach bekannten reprographischen Methoden in ein sichtbares Bild übergeführt werden.

Es wurde nun gefunden, dass Dithiochinacridone, die keine hohe Lichtabsorption im NIR-Bereich aufweisen, bei Bestrahlung mit Laserlicht im NIR-Bereich (zum Beispiel einem Diodenlaser) direkt einer Phasenumwandlung unterliegen, wobei die Umwandlungstemperatur etwa bei 230 °C liegt. Die Phasenumwandlung ist mit einer starken Veränderung der Lichtabsorption verbunden. Es wurde ferner gefunden, dass diese Umwandlung auch durch den Kontakt mit einer Hydrazonverbindung induziert wird und die Umwandlungstemperatur hierbei auf etwa 180 °C gesenkt werden kann. Mit Dithiochinacridonen beschichtete Substrate, die gegebenenfalls eine weitere Schicht mit einer Hydrazonverbindung enthalten, eignen sich daher ausgezeichnet als Materialien zur Aufzeichnung, Speicherung und Wiedergabe von Informationen (WORM-Systeme) zum Beispiel in Form von "compact discs".

Ein Gegenstand der Erfindung ist ein Verfahren zum optischen Aufzeichnen und Speichern von Informationen in Form von Bits, das dadurch gekennzeichnet ist, dass man ein Aufzeichnungsmaterial, bei dem auf einem Träger mindestens eine Schicht eines Dithiochinacridons als Aufzeichnungsschicht aufgebracht ist, punktweise oder linienweise einer Laserstrahlung im NIR-Bereich aussetzt.

Geeignete Träger sind zum Beispiel Metalle, Metallegierungen, Gläser, Mineralien, Keramiken und duroplastische oder thermoplastische Kunststoffe. Der Träger kann eine Dikke von 0,01 mm bis 1 cm, bevorzugt 0,1 mm bis 0,5 cm aufweisen. Bevorzugte Träger sind Gläser und homo- oder kopolymere Kunststoffe. Geeignete Kunststoffe sind zum Beispiel thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze.

Dithiochinacridone sind bekannt und zum Beispiel in der US-A-4 760 004 beschrieben. Sie können den Formeln I oder Ia entsprechen, wobei diese Verbindungen auch als Mischungen vorliegen können, 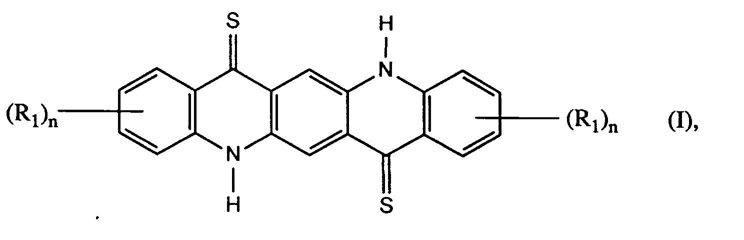 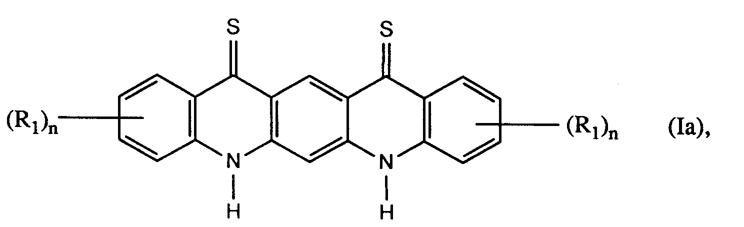
worin R₁ F, Cl, Br, C₁-C₁₈-Alkyl oder C₁-C₃-Alkoxy darstellt und n für 0 oder die Zahlen 1, 2 oder 3 steht.

R₁ kann als Alkyl linear oder verzweigt sein und das Alkyl enthält bevorzugt 1 bis 12, besonders bevorzugt 1 bis 6 und insbesondere bevorzugt 1 bis 3 C-Atome. Beispiele sind Methyl, Ethyl, n- und i-Propyl, n-, i- und t-Butyl, Pentyl, Hexyl, Octyl, Nonyl, Decyl, Dodecyl, Tetradecyl und Octadecyl. Besonders bevorzugt sind Methyl und Ethyl. Beispiele für R₁ als Alkoxy sind Methoxy, Ethoxy und n- und i-Propoxy. In den Formeln I und Ia steht n bevorzugt für 0, 1 oder 2 und besonders bevorzugt für 0 oder 1. In einer bevorzugten Ausführungsform handelt es sich bei den Dithiochinacridonen um solche der Formeln I und Ia, worin R₁ -F, -Cl, -Br, -CH₃ oder CH₃O- bedeutet und n für 0 oder 1 steht. Besonders bevorzugt ist Dithiochinacridon.

Die Schichtdicke der Schicht aus Dithiochinacridonen beträgt zum Beispiel 100 bis 5000 Å, bevorzugt 200 bis 3000 Å und besonders bevorzugt 300 bis 1500 Å.

Auf dem Träger können ein oder mehrere, zum Beispiel 1 bis 10, bevorzugt 1 bis 5 und besonders bevorzugt 1 bis 3 Schichten aus Dithiochinacridonen aufgebracht sein. Die Anzahl der Schichten und weiterer Schichten richtet sich hauptsächlich nach der optischen Dichte des Schichtaufbaus, die bei der zur Aufzeichnung verwendeten Wellenlänge noch eine ausreichende Transmission gewährleisten muss.

Auf der Schicht aus Dithiochinacridonen oder auf dem Träger kann eine Reflexionsschicht aufgebracht sein, die eine Dicke von zum Beispiel 100 bis 5000 Å, bevorzugt 100 bis 3000 Å und besonders von 300 bis 1500 Å aufweisen kann. Als reflektierendes Material eignen sich besonders Metalle, die die zur Aufzeichnung und Wiedergabe verwendete Laserstrahlung gut reflektieren, zum Beispiel die Metalle der dritten, vierten und fünften Hauptgruppe und den Nebengruppen des periodischen Systems der chemischen Elemente. Besonders geeignet sind Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt und die Lanthanidenmetalle Ce, Pr, Nd, Pm, Sm, Eu, Gd, Tb, Dy, HO, Er, Tm, Yb und Lu. Besonders bevorzugt ist aus Gründen der hohen Reflektivität und leichten Herstellbarkeit eine Reflexionsschicht aus Aluminium oder Gold.

Die je nach Schichtaufbau oberste Schicht, zum Beispiel die Reflexionsschicht, die Schicht aus einem Dithiochinacridon oder eine weitere Hilfsschicht (zum Beispiel aus einem Hydrazon) wird zweckmässig mit einer Schutzschicht versehen, die eine Dicke von 0,1 bis 100 µm, bevorzugt 0,1 bis 50 µm und besonders bevorzugt 0,5 bis 15 µm aufweisen kann. Als Schutzmaterial eignen sich hauptsächlich Kunststoffe, die in dünner Schicht entweder direkt oder mit Hilfe von Haftschichten auf den Träger oder die oberste Schicht aufgetragen sind. Man wählt zweckmässig mechanisch und thermisch stabile Kunststoffe mit guten Oberflächeneigenschaften, die noch modifiziert, zum Beispiel beschrieben werden können. Es kann sich sowohl um duroplastische wie auch thermoplastische Kunststoffe handeln. Bevorzugt sind strahlungsgehärtete (zum Beispiel mit UV-Strahlung) Schutzschichten, die besonders einfach und wirtschaftlich herstellbar sind. Strahlungshärtbare Materialien sind in grosser Vielzahl bekannt. Beispiele für strahlungshärtbare Monomere und Oligomere sind Acrylate und Methacrylate von Diolen, Triolen und Tetrolen, Polyimide aus aromatischen Tetracarbonsäuren und aromatischen Diaminen mit C₁-C₄-Alkylgruppen in mindestens zwei Orthostellungen der Aminogruppen, und Oligomere mit Dialkyl-, zum Beispiel Dimethylmaleinimidylgruppen. Spezifische Beispiele sind UV-vernetzbare Polymere auf der Basis von Polyacrylaten wie zum Beispiel RENGOLUX® RZ 3200/003 oder 3203/001 der Firma Morton International-Dr. Renger.

In einer bevorzugten Ausführungsform des erfindungsgemässen Verfahrens befindet sich zwischen dem gegebenenfalls mit einer Reflexionsschicht versehenen Träger und der Schicht aus Dithiochinacridonen oder auf dieser Schicht eine weitere Schicht eines organischen Hydrazons, wobei das Hydrazon bevorzugt eine aromatische Gruppe an einem N-Atom gebunden enthält. Die Schicht kann als solche aus dem Hydrazon gebildet sein, oder als feste Lösung des Hydrazons in oder als gleichmässige Mischung mit einem transparenten Bindemittel, zum Beispiel einem Kunststoff vorliegen. Die Schichtdicke bei reinen Hydrazonschichten kann zum Beispiel 50 bis 2000 Å, bevorzugt 100 bis 1000 Å und besonders bevorzugt 100 bis 500 Å betragen. Die Schichtdicke der festen Lösung kann zum Beispiel 0,1 bis 100 µm, bevorzugt 0,5 bis 50 µm und besonders bevorzugt 0,5 bis 5 µm betragen. Die feste Lösung kann 0,1 bis 95 Gew.-%, bevorzugt 1 bis 80 Gew.-% und besonders bevorzugt 1 bis 60 Gew.-% eines Hydrazons enthalten, bezogen auf die Gesamtmenge an Bindemittel und Hydrazon. Als transparente Bindemittel eignen sich zum Beispiel die zuvor für das Substrat erwähnten Kunststoffe. Bevorzugt sind insbesondere Polycarbonate, sowie ferner Polymethacrylate, Polyolefine, duroplastische Polyester und Epoxidharze.

Bei einem mehrschichtigen Aufbau kann abwechselnd eine Schicht aus einem Dithiochinacridon und einem Hydrazon in dieser oder in umgekehrter Reihenfolge auf dem Träger aufgebracht sein, je nachdem, welche Schicht zuerst aufgetragen wird.

In einer besonderen Ausgestaltungsform stellt die ein Hydrazon enthaltende Kunststoffschicht den Träger des erfindungsgemässen Aufzeichnungsmaterials dar, wobei die Schichtdicken dann ebenfalls 0,1 mm bis 1cm, bevorzugt 0,1 bis 0,5 cm betragen können

In einer besonders bevorzugten Ausführungsform des erfingungsgemäss verwendeten Aufzeichnungsmaterials ist auf dem Träger mindestens eine Schicht aus einer Mischung eines Dithiochinacridons und eines Hydrazons aufgebracht, wobei das Gewichtsverhältnis von 100:1 bis 1:1, bevorzugt 50:1 bis 5:1 beträgt. Mit dem gemeinsamen Beschichten beider Substanzen zum Beispiel mittels Vakuumaufdampfverfahren können überraschend sehr gleichmässige Schichten mit einer einheitlichen optischen Dichte erzielt werden. Es werden keine einzelnen Kristallphasen beobachtet.

Die Hydrazone enthalten bevorzugt 6 bis 40 C-Atome und besonders bevorzugt 10 bis 30 C-Atome. Sie sind durch das Strukturelement -CH=N-N= gekennzeichnet. Die Hydrazone können zum Beispiel der Formel II entsprechen, 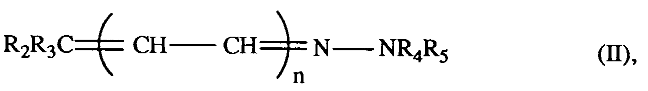
worin R₂ H, C₁-C₆-Alkyl oder Phenyl bedeutet, das unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert ist,
R₃ Phenyl, Naphthyl, Anthryl, Styryl, Pyridyl, Furyl oder Thiophenyl darstellt, die unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert sind, oder R₂ H und R₃ einen Carbazolrest der Formel 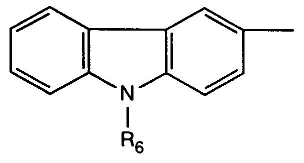
bedeuten, der unsubstituiert oder mit F, Cl, Br, C₁-C₆-Alkyl, C₁-C₆-Alkoxy oder Di(C₁-C₆ -Alkyl)amino substituiert ist, wobei R₆ C₁-C₆-Alkyl darstellt,
R₄ und R₅ unabhängig voneinander C₁-C₆-Alkyl, Phenyl, Naphthyl oder Benzyl oder mit F, Cl, Br, C₁-C₆-Alkyl, C₁ -C₆-Alkoxy oder Di(C₁-C₆-Alkyl)amino substituiertes Phenyl, Naphthyl oder Benzyl bedeuten,
und n für 0 oder 1 steht.

In der Formel II steht n bevorzugt für 0. R₂, R₃, R₄, R₅, R₆ und Substituenten können als Alkyl linear oder verzweigt sein und enthalten bevorzugt 1 bis 4 C-Atome, besonders bevorzugt 1 oder 2 C-Atome. Einige Beispiele sind Methyl, Ethyl, n- und i-Propyl, n-, i- und t-Butyl, Pentyl und Hexyl. Bevorzugt sind Methyl und Ethyl.

Der Substituent Alkoxy enthält bevorzugt 1 bis 4 C-Atome und er kann linear oder verzweigt sein. Einige Beispiele sind Methoxy, Ethoxy, n- und i-Propoxy, n-, i- und t-Butoxy, Pentoxy und Hexoxy. Bevorzugt sind Methoxy und Ethoxy.

Einige Beispiele für bevorzugte Alkylaminosubstituenten sind Dimethyl-, Diethyl-, Methyl-ethyl-, Di-n- oder Di-i-propyl-, Di-n-butyl-, n-Propyl-methyl-, n-Butyl-methyl-, n-Propyl-ethyl-, n-Butyl-ethyl-, Methyl-phenyl-, Ethyl-phenyl-, Methyl-benzyl- und Ethylbenzyl-amino.

Einige bevorzugte Hydrazone sind solche der Formeln

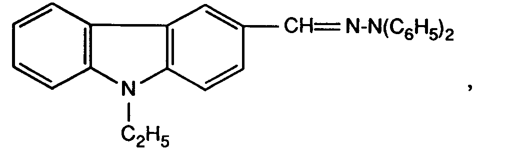

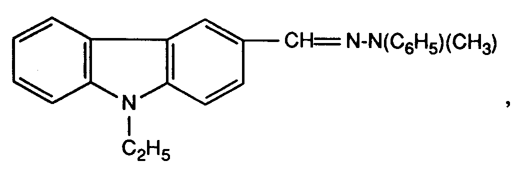

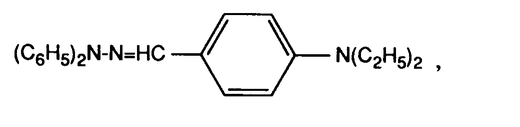

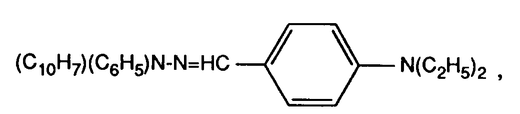

(C₆H₅)₂N-N=CH-CH=C(p-CH₃O-C₆H₅)₂.

Die erfindungsgemäss zu verwendenden Aufzeichnungsmaterialien können nach an sich bekannten Verfahren hergestellt werden, wobei je nach verwendeten Materialien und deren Funktionsweise unterschiedliche Beschichtungsmethoden angewendet werden können.

Träger, die ein Hydrazon enthalten, können nach den für duroplastische und thermoplastische üblichen Misch- und Formgebungsverfahren wie zum Beispiel Giess-, Press-, Spritzguss- und Extrusionsverfahren hergestellt werden.

Geeignete Beschichtungsverfahren sind zum Beispiel Tauchen, Giessen, Streichen, Rakeln, Schleudergiessen und Aufdampfverfahren, die im Hochvakuum durchgeführt werden. Bei der Anwendung von zum Beispiel Giessverfahren werden im allgemeinen Lösungen in organischen Lösungsmitteln verwendet, die im Fall der Verwendung von Hydrazonen noch ein Bindemittel enthalten können. Bei der Verwendung von Lösungsmitteln ist darauf zu achten, dass die verwendeten Träger gegen diese Lösungsmittel unempfindlich sind Bevorzugt werden alle Schichten mittels Aufdampfverfahren besonders im Vakuum hergestellt. Geeignete Beschichtungsverfahren sind zum Beispiel in der EP-A-0 401 791 beschrieben.

Das Aufbringen der Aufzeichnungsschicht(en) und der metallischen Reflexionsschichten erfolgt bevorzugt durch Aufdampfen im Vakuum. Das aufzubringende Material wird zunächst in ein geeignetes Gefäss gefüllt, das gegebenenfalls mit einer Widerstandsheizung versehen ist, und dann in eine Vakuumkammer gesetzt. Der zu bedampfende Träger wird oberhalb des Gefässes mit dem aufzudampfenden Material in einen Halter eingesetzt. Dieser ist so konstruiert, dass der Träger gegebenenfalls rotiert (z.B. mit 50 Upm) und geheizt werden kann. Die Vakuumkammer wird auf etwa 1,3 · 10⁻⁵ bis 1,3 · 10⁻⁶ mbar ( 10⁻⁵ bis 10⁻⁶ Torr) evakuiert, und die Heizung wird so eingestellt, dass die Temperatur des aufzudampfenden Materials bis zu dessen Verdampfungstemperatur ansteigt. Die Verdampfung wird so lange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden. Diese Aufdampfmethode ist besonders zum gleichzeitigen Aufbringen von Dithiochinacridonen und Hydrazonen zur Bildung homogener Mischschichten geeignet.

Die Sputtertechnik wird besonders wegen der hohen Haftfähigkeit zum Träger für das Aufbringen der metallischen Reflexionsschicht bevorzugt. Das aufzubringende Material (z.B. Aluminium) in Form einer Platte wird als eine "Target"-Elektrode benutzt, während der Träger auf der Gegenelektrode befestigt wird. Zuerst wird die Vakuumkammer auf etwa 10⁻⁶ Torr evakuiert und dann inertes Gas, wie z.B. Argon, bis zu etwa 10⁻³ Torr eingeführt. Zwischen der "Target"-Elektrode und der Gegenelektrode wird eine hohe Gleich- oder Radiofrequenz-Spannung von mehreren kV, gegebenenfalls unter Verwendung von Permanentmagneten ("Magnetron-Sputtering"), angelegt, um Ar⁺-Plasma zu erzeugen. Die durch die Ar⁺-Ionen von der "Target"-Elektrode gesputterten (herausgeschlagenen) Metallteilchen werden auf dem Substrat gleichmässig und fest deponiert. Die Beschichtung erfolgt innerhalb von einigen 10 Sekunden bis mehreren Minuten je nach Targetmaterialien, Sputtermethode und Sputterbedingungen. Diese Sputtertechnik ist in Fachbüchern ausführlich beschrieben wie (z.B. W. Kern und L. Vossen, "Thin Film Processes", Academic Press, 1978).

Die Dicke der beim Aufdampfen gebildeten Schichten kann mit Hilfe bekannter Verfahren überwacht werden, z.B. mit Hilfe eines optischen Systems, welches während der Aufdampfung das Reflexionsvermögen der mit dem Absorptionsmaterial bedeckten Reflexionsoberfläche misst. Vorzugsweise wird das Wachsen der Schichtdicke mit einem Schwingquarz verfolgt.

Schutzschichten werden bevorzugt mittels Belackungsanlagen ("spin coater") aufgetragen und bei Verwendung von lichtempfindlichen Materialien mit UV-Licht vernetzt.

Das erfindungsgemäss zu verwendende Material eignet sich hervorragend zur Aufzeichnung von Informationen durch Bestrahlung mit Lasern im NIR-Bereich. Nach der Bestrahlung wird eine stark erhöhte Absorption des Laserlichts beobachtet, so dass die Reflexion bzw. Transmission nach der Bestrahlung erheblich niedriger liegt. Die Veränderung der Reflexion bzw. Tansmission kann daher zum Auslesen der Information verwendet werden, wobei keine Zerstörung der eingeschriebenen Information durch die zum Auslesen verwendete Laserstrahlung stattfindet. Die Informationen können daher mehrfach ausgelesen werden.

Der Aufbau des erfindungsggemässen Aufzeichnungsmaterials richtet sich hauptsächlich nach der Auslesemethode; bekannte Funktionsprinzipien sind die Messung der Veränderung der Transmission oder der Reflexion. Wenn das Aufzeichnungsmaterial gemäss der Veränderung der Lichttransmission aufgebaut wird, kommt zum Beispiel folgende Struktur in Frage: Transparenter Träger/Aufzeichnungsschicht (gegebenenfalls mehrschichtig) und falls zweckmässig, transparente Schutzschicht Das Licht zur Aufzeichnung sowie zum Auslesen kann entweder von der Trägerseite oder der Aufzeichnungsschicht bzw. gegebenenfalls der Schutzschichtseite eingestrahlt werden, wobei sich der Lichtdetektor immer auf der Gegenseite befindet.

Wenn das Aufzeichnungsmaterial gemäss der Veränderung der Reflexion aufgebaut wird, so können zum Beispiel folgende andere Strukturen zur Anwendung kommen: Transparenter Träger/Aufzeichnungsschicht (gegebenenfalls mehrschichig)/Reflexionsschicht und falls zweckmässig, Schutzschicht (nicht unbedingt transparent), oder Träger (nicht unbedingt transparent)/Reflexionsschicht/Aufzeichnungsschicht und falls zweckmässig transparente Schutzschicht. Im ersten Fall wird das Licht von der Trägerseite eingestrahlt, während im letzen Falls die Strahlung von der Aufzeichnungsschicht- bzw. gegebenenfalls von der Schutzschichtseite einfällt. In beiden Fällen befindet sich der Lichtdetektor auf gleicher Seite wie die Lichtquelle. Der ersterwähnte Aufbau des erfindungsgemäss zu verwendenden Aufzeichnungsmaterials ist im allgemeinen bevorzugt.

Geeignete Laser sind zum Beispiel handelsübliche Diodenlaser, insbesondere Halbleiter-Diodenlaser, zum Beispiel GaAsAl-, InGaAlP- oder GaAs-Laser einer Wellenlänge von 780, 650 beziehungsweise 830 nm, oder He/Ne-Laser (633 nm) und Argon-Laser (514 nm). Die Aufzeichnung kann mit Hilfe eines Lichtmodulators Punkt für Punkt vorgenommen werden.

Die zur Aufzeichnung verwendete Energie der Laserstrahlung kann zum Beispiel von 0,1 bis 10 nJ/Markierung (Bit), bevorzugt von 0,2 bis 5 nJ/Markierung (Bit) und besonders bevorzugt 0,8 bis 3 nJ/Markierung (Bit) betragen. Die Energiemenge wird im wesentlichen durch die Bestrahlungszeit gesteuert, zum Beispiel durch Pulse im Bereich von einigen Mikrosekunden, zum Beispiel 10 bis 100 Nanosekunden.

Das erfindungsgemässe Verfahren ermöglicht eine Speicherung von Informationen mit hoher Zuverlässigkeit und Beständigkeit, welche sich durch eine sehr gute mechanische und thermische Stabilität sowie durch eine hohe Lichstabilität und scharfe Randzonen auszeichnen. Besonders vorteilhaft ist das überraschend hohe Signal/Rauschverhältnis von Trägermaterial zur Informationsmarkierung, das ein einwandfreies Auslesen zulässt. Ferner ist das optische Aufzeichnungssystem einfach und kostengünstig.

Das Auslesen der Information erfolgt durch Messung der Absorption nach dem Reflexionsverfahren oder Transmissionsverfahren unter Verwendung von Laserstrahlung, wobei es besonders vorteilhaft ist, dass Laserstrahlung der zur Aufzeichnung benutzten Wellenlänge verwendet werden kann, also auch kein zweiter Laser eingesetzt werden muss. In einer bevorzugten Ausführungsform erfolgt das Aufzeichnen und Auslesen der Information bei gleicher Wellenlänge. Beim Auslesen verwendet man im allgemeinen energiearme Laser, deren Strahlungsintensität gegenüber der zur Aufzeichnung verwendeten Laserstrahlung zum Beispiel um das zehn- bis fünfzigfache reduziert ist. Die Informationen können beim erfindungsgemäss verwendeten Aufzeichnungsmaterial ein- oder mehrfach ausgelesen werden. Die Veränderung im Absorptionsspektrum bzw. die gespeicherte Information kann mit einem Photodetektor unter Verwendung eines energiearmen Lasers abgelesen werden. Geeignete Photodetektoren umfassen PIN-Photodioden sowie Mikroskop -Spektrophotometer, wie z.B. UMSP 80 von Carl Zeiss, welche es ermöglichen, die spektralen Veränderungen durch Transmission oder Absorption und insbesondere Reflexion zu messen.

Ein anderer Gegenstand der Erfindung ist ein Material zur optischen Aufzeichnung und zur Speicherung von Informationen, bei dem auf einem transparenten und dielektrischen Träger mindestens eine Schicht eines Dithiochinacridons als Aufzeichnungsmaterial aufgebracht ist. Zwischen dem Aufzeichnungsmaterial und dem Träger oder auf dem Aufzeichnungsmaterial kann sich eine Schicht aus einem organischen Hydrazon gegebenenfalls zusammen mit einem transparenten Bindemittel befinden, oder das Aufzeichnungsmaterial kann eine homogene Mischung aus Dithiochinacridon und organischem Hydrazon darstellen. Auf der obersten Schicht kann eine Reflexionsschicht aufgebracht sein, die vorteilhaft mit einer Schutzschicht bedeckt ist. Im übrigen gelten die zuvor beschriebenen Ausgestaltungen und Bevorzugungen.

Ein weiterer Gegenstand der Erfindung ist ein Informationen enthaltendes Material, bei dem in der Aufzeichnungsschicht des erfindungsgemässen verwendeten Aufzeichnungsmaterials Markierungen in Form von Bits eingeschrieben sind, die im nahen NIR-Bereich gegenüber der unveränderten Umgebung eine erhöhte Absorption und dadurch verminderte Reflexion und Transmission aufweisen. Im übrigen gelten die zuvor beschriebenen Ausgestaltungen und Bevorzugungen.

Das erfindungsgemässe Informationen enthaltende Material stellt insbesondere ein optisches Informationsmaterial vom WORM-Typ dar. Es kann zum Beispiel als abspielbare Kompakt Disk, als Speichermaterial für Computer oder als Ausweis- und Sicherheitskarten verwendet werden.

Die nachfolgenden Beispiele erläutern die Erfindung näher.

### Beispiel 1: Aufzeichnungsmaterial mit einer Aufzeichnungsschicht aus Dithiochinacridon und einer Hydrazonzwischenschicht.

N'-Ethyl-carbazol-2-aldehyd-N,N-diphenylhydrazon wird im Hochvakuum (etwa 4x 10⁻⁶ mbar) in einer Schichtdicke von etwa 200 Å auf einen Träger aus Polycarbonat (Dicke 1,2 mm) aufgedampft. Danach wird auf diese Schicht im Hochvakuum Dithiochinacridon in einer Schichtdicke von etwa 800 Å aufgedampft. Darauf wird auf der Schicht aus Dithiochinacridon nach dem Verfahren der Vakuumverdampfung im Hochvakuum eine etwa 1000 Å dicke Reflexionsschicht aus Gold aufgedampft. Elektronische Informationen werden unter Verwendung eines GaAsAl-Diodenlasers (Toshiba) von 780 nm (Leistung 20 mW) punktweise aufgezeichnet. Die vor und nach Aufzeichnung bei der gleichen Wellenlänge von 780 nm durch den Träger gemessene Reflexion beträgt 73 % beziehungsweise 35 %.

### Beispiel 2: Aufzeichnungsmaterial mit einer Aufzeichnungsschicht aus Dithiochinacridon und einer Zwischenschicht aus einem Polycarbonat/Hydrazon-Film.

1 g p-Diethylaminobenzaldehyd-N,N-diphenylhydrazon und 0,5 g Polycarbonat (kommerzielles Makrolon®) werden in 10 ml Cyclopentanon gelöst und mittels Schleudergiesstechnik in einer Schichtdicke von 0,8 µm auf einen Glasträger (Dicke 1,0 mm) aufgetragen. Gemäss Beispiel 1 wird dann eine Schicht aus Dithiochinacridon in einer Dicke von 500 Å und aus Gold als Reflexionsschicht in einer Dicke von 1500 Å aufgetragen. Die Reflexion vor und nach der Informationsaufzeichnung beträgt 73 % beziehungsweise 40 %.

### Beispiel 3: Aufzeichnungsmaterial mit einer Aufzeichnungsschicht aus Dithiochinacridon.

Gemäss Beispiel 1 werden Schichten aus Dithiochinacridon (Dicke 700 Å) und Aluminium (Dicke 2000 Å) auf einem Glasträger (Dicke 1,0 mm) aufgetragen. Die Reflexion vor und nach der Informationsaufzeichnung beträgt 65 % beziehungsweise 38 %.

## Patentansprüche

1. Verfahren zum optischen Aufzeichnen und Speichern von Informationen in Form von Bits, das dadurch gekennzeichnet ist, dass man ein Aufzeichnungmaterial, bei dem auf einem Träger mindestens eine Schicht eines Dithiochinacridons als Aufzeichnungsschicht aufgebracht ist, punktweise oder linienweise einer Laserstrahlung im nahen NIR-Bereich aussetzt.

2. Verfahren gemäss Anspruch 1, dadurch gekennzeichnet, dass es sich bei dem Träger um Metalle, Metalllegierungen, Gläser, Mineralien, Keramiken und duroplastische oder thermoplastische Kunststoffe handelt.

3. Verfahren gemäss Anspruch 2, dadurch gekennzeichnet, dass es sich bei dem Träger um Gläser oder homo- oder kopolymere Kunststoffe handelt.

4. Verfahren gemäss Anspruch 3, dadurch gekennzeichnet, dass es sich bei dem Kunststoff um thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze handelt.

5. Verfahren gemäss Anspruch 1, dadurch gekennzeichnet, dass der Träger eine Dicke von 0,01 mm bis 1 cm aufweist.

6. Verfahren gemäss Anspruch 1, dadurch gekennzeichnet, dass die Dithiochinacridone den Formeln I oder Ia oder Mischungen dieser Dithiochinacridone entsprechen, 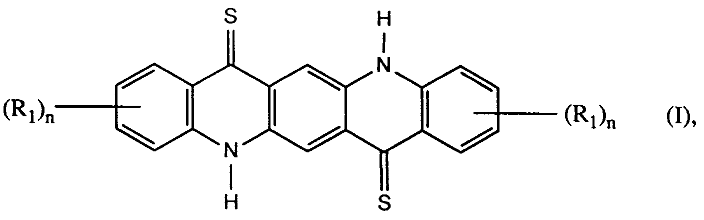 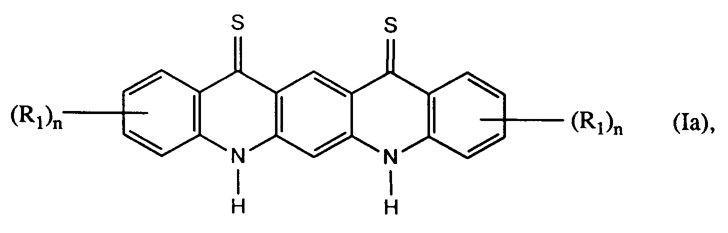 worin R₁ F, Cl, Br, C₁-C₁₈-Alkyl oder C₁-C₃-Alkoxy darstellt und n für 0 oder die Zahlen 1, 2 oder 3 steht.

7. Verfahren gemäss Anspruch 6, dadurch gekennzeichnet, dass R₁ -F, -Cl, -Br, -CH₃ oder CH₃O- bedeutet und n für 0 oder 1 steht.

8. Verfahren gemäss Anspruch 1, dadurch gekennzeichnet, dass die Schicht aus Dithiochinacridon besteht.

9. Verfahren gemäss Anspruch 1, dadurch gekennzeichnet, dass die Schicht aus Dithiochinacridonen eine Dicke von 100 bis 5000 Å aufweist.

10. Verfahren gemäss Anspruch 1, dadurch gekennzeichnet, dass die Schicht aus Dithiochinacridonen eine Dicke von 200 bis 3000 Å aufweist.

11. Verfahren gemäss Anspruch 1, dadurch gekennzeichnet, dass auf der Schicht aus Dithiochinacridonen oder auf dem Träger eine Reflexionsschicht aufgebracht ist.

12. Verfahren gemäss Anspruch 11, dadurch gekennzeichnet, dass die Reflexionsschicht eine Dicke von 100 bis 5000 Å aufweist.

13. Verfahren gemäss Anspruch 1, dadurch gekennzeichnet, dass die Reflexionsschicht aus einem Metall der dritten, vierten und fünften Hauptgruppe und den Nebengruppen des Periodensystems der chemischen Elemente besteht.

14. Verfahren gemäss Anspruch 13, dadurch gekennzeichnet, dass die Reflexionsschicht aus den Metallen Aluminium oder Gold besteht.

15. Verfahren gemäss Anspruch 1, dadurch gekennzeichnet, dass die oberste Schicht mit einer Schutzschicht bedeckt ist.

16. Verfahren gemäss Anspruch 1, dadurch gekennzeichnet, dass sich zwischen Träger und der Schicht aus Dithiochinacridonen oder auf der Schicht aus Dithiochinacridonen eine weitere Schicht aus einem organischen Hydrazon befindet.

17. Verfahren gemäss Anspruch 16, dadurch gekennzeichnet, dass die Schicht aus einem reinen Hydrazon gebildet ist, oder als feste Lösung des Hydrazons in oder als gleichmässige Mischung mit einem transparenten Bindemittel vorliegt.

18. Verfahren gemäss Anspruch 16, dadurch gekennzeichnet, dass die Schicht aus einem reinen Hydrazon eine Dicke von 50 bis 2000 Å aufweist.

19. Verfahren gemäss Anspruch 17, dadurch gekennzeichnet, dass die Schicht der festen Lösung oder der Mischung eine Dicke von 0,1 bis 100 µm aufweist.

20. Verfahren gemäss Anspruch 17, dadurch gekennzeichnet, dass die ein Hydrazon und ein Bindemittel enthaltende Schicht den transparenten Träger des Aufzeichnungsmaterials darstellt.

21. Verfahren gemäss Anspruch 1, dadurch gekennzeichnet, dass das Aufzeichnungsmaterial aus mindestens einer Schicht einer homogenen Mischung aus einem Dithiochinacridon und einem Hydrazon darstellt.

22. Verfahren gemäss Anspruch 16, dadurch gekennzeichnet, dass das Hydrazon 6 bis 40 C-Atome enthält.

23. Verfahren gemäss Anspruch 16, dadurch gekennzeichnet, dass das Hydrazon der Formel II entspricht, 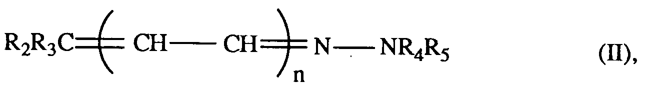 worin R₂ H, C₁-C₆-Alkyl oder Phenyl bedeutet, das unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert ist,
R₃ Phenyl, Naphthyl, Anthryl, Styryl, Pyridyl, Furyl oder Thiophenyl darstellt, die unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert sind, oder R₂ H und R₃ einen Carbazolrest der Formel 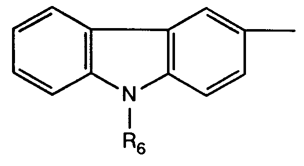 bedeuten, der unsubstituiert oder mit F, Cl, Br, C₁-C₆-Alkyl, C₁-C₆-Alkoxy oder Di(C₁-C₆ -Alkyl)amino substituiert ist, wobei R₆ C₁-C₆-Alkyl darstellt,
R₄ und R₅ unabhängig voneinander C₁-C₆-Alkyl, Phenyl, Naphthyl oder Benzyl oder mit F, Cl, Br, C₁-C₆-Alkyl, C₁-C₆-Alkoxy oder Di(C₁-C₆-Alkyl)amino substituiertes Phenyl, Naphthyl oder Benzyl bedeuten,
und n für 0 oder 1 steht.

24. Verfahren gemäss Anspruch 16, dadurch gekennzeichnet, dass die Hydrazone den Formeln 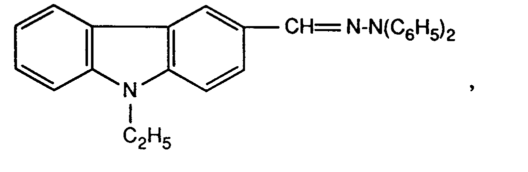 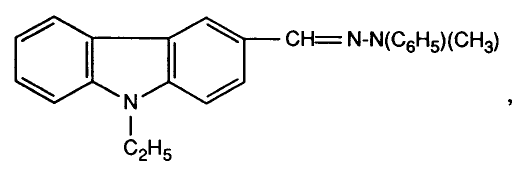 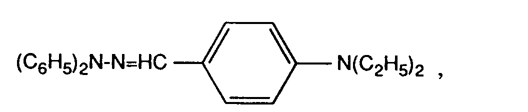 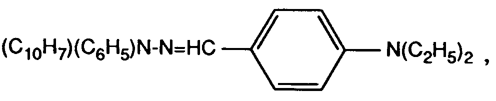
(C₆H₅)₂N-N=CH-CH=C(p-CH₃O-C₆H₅)₂
entsprechen.

25. Verfahren gemäss Anspruch 1, dadurch gekennzeichnet, dass das verwendete Material den Aufbau (a) transparenter Träger, (b) Aufzeichnungsschicht und (c) transparente Schutzschicht aufweist.

26. Verfahren gemäss Anspruch 1, dadurch gekennzeichnet, dass das verwendete Material den Aufbau (a) transparenter Träger, (b) Aufzeichnungsschicht, (c) Reflexionsschicht und (d) transparente Schutzschicht aufweist.

27. Verfahren gemäss Anspruch 1, dadurch gekennzeichnet, dass das verwendete Material den Aufbau (a) Träger, (b) Reflexionsschicht, (c) Aufzeichnungsschicht und (d) transparente Schutzschicht aufweist.

28. Verfahren gemäss Anspruch 1, dadurch gekennzeichnet, dass die Laserstrahlung eine Energie von 0,1 bis 10 nJ/Markierung (Bit) beträgt.

29. Verfahren gemäss Anspruch 1, dadurch gekennzeichnet, dass man die gespeicherte Information durch Messung der Veränderung der Absorption nach dem Reflexionsverfahren oder nach dem Transmissionsverfahren unter Verwendung von Laserstrahlung im NIR-Bereich ein- oder mehrfach ausliest.

30. Verfahren gemäss Anspruch 29, dadurch gekennzeichnet, dass die gespeicherte Information bei der zur Aufzeichnung benutzten Wellenlänge ausgelesen wird.

31. Material zur optischen Aufzeichnung und zur Speicherung von Informationen, bei dem auf einem transparenten und dielektrischen Träger mindestens eine Schicht eines Dithiochinacridons als Aufzeichnungsmaterial aufgebracht ist.

32. Material gemäss Anspruch 31, dadurch gekennzeichnet, dass sich zwischen dem Aufzeichnungsmaterial und dem Träger oder auf dem Aufzeichnungsmaterial eine Schicht aus einem organischen Hydrazon gegebenenfalls zusammen mit einem transparenten Bindemittel befindet.

33. Material gemäss Anspruch 31, dadurch gekennzeichnet, dass das Aufzeichnungsmaterial eine homogene Mischung aus einem Dithiochinacridon und organischem Hydrazon darstellt.

34. Material gemäss Anspruch 31, dadurch gekennzeichnet, dass auf der obersten Schicht eine Reflexionsschicht aufgebracht ist, die gegebenenfalls mit einer Schutzschicht bedeckt ist.

35. Informationen enthaltendes Material, bei dem in der Aufzeichnungsschicht eines Aufzeichnungmaterials aus einem Träger, auf dem mindestens eine Schicht eines Dithiochinacridons als Aufzeichnungsschicht aufgebracht ist, Markierungen in Form von Bits eingeschrieben sind, die im NIR-Bereich gegenüber der unveränderten Umgebung eine erhöhte Absorption und dadurch verminderte Reflexion und Transmission aufweisen.

36. Material gemäss Anspruch 35, dadurch gekennzeichnet, dass es den Aufbau (a) transparenter Träger, (b) Aufzeichnungsschicht und (c) transparente Schutzschicht aufweist.

37. Material gemäss Anspruch 35, dadurch gekennzeichnet, dass es den Aufbau (a) transparenter Träger, (b) Aufzeichnungsschicht, (c) Reflexionsschicht und (d) transparente Schutzschicht aufweist.

38. Material gemäss Anspruch 35, dadurch gekennzeichnet, dass es den Aufbau (a) Träger, (b) Reflexionsschicht, (c) Aufzeichnungsschicht und (d) transparente Schutzschicht aufweist.

39. Material gemäss den Ansprüchen 35 bis 38, dadurch gekennzeichnet, dass die Aufzeichnungsschicht aus mindestens einer Schicht eines Dithiochinacridons und mindestens einer Schicht eines organischen Hydrazons, oder aus mindestens einer Schicht in Form einer homogenen Mischung eines Dithiochinacridons und eines organischen Hydrazons gebildet ist.
